# EUROPEAN PATENT SPECIFICATION

(11) **EP 2 544 427 B1**
(45) Date of publication and mention of the grant of the patent: **27.12.2017**
(21) Application number: 12175512.8
(22) Date of filing: 09.07.2012
(51) Int. Cl.: H04L 29/06, H04L 12/22

(54) **Collaboration privacy**
Zusammenarbeitsprivatsphäre
Confidentialité de collaboration

(30) Priority: 07.07.2011 US 201113135583
(43) Date of publication of application: 09.01.2013
(73) Proprietor: Mitel Networks Corporation, Ottawa, ON K2K 2W7 (CA)
(72) Inventor: Yeung, Michael, Nepean, Ontario K2G 6R6 (CA)
(74) Representative: Derry, Paul Stefan

(56) References cited:
- EP-A1- 2 105 871
- EP-A2- 1 398 942
- US-A1- 2010 318 571
- US-A1- 2011 161 424

## Description

### Technical Field

This disclosure generally relates to communications, and more particularly, although not exclusively, to facilitating private collaborations while in a conference with untrusted parties that do not have full privileges to the communications.

### Background

Collaboration solutions are a must particularly when a large number of parties are participating in a meeting. US Patent Application Serial No. 12/079,519 titled "Method, System and Apparatus for Managing Context" by Tim Trinh and Tom Gray (hereinafter the '519 Application) discloses collaborations between a number of groups to achieve a common goal. The '519 Application describes contexts which store the particulars of any specific collaboration. Using these contexts, interactions within any form of conference are enhanced, for example, voice, video, text, multimedia and so on. The '519 Application describes a context object, which will, among other things, store records of previous interactions within a specific context.

The '519 Application enhances collaboration among participants who have come together in a context. However the '519 Application does not address the issues that arise when the participants in a context collaborate with people outside of a context, that is, external or untrusted parties. For example, a group of people are assembled to prepare documents in furtherance of a patent enforcement project. Attorneys will likely need to interact with inventors or other personnel who have direct knowledge of the patents that they are considering and the products to which they refer. The external personnel will add to the context's discussion but, in certain cases, they should not be privy to the context data or even to some of the context's goals and previous considerations. It is common in certain discussions to hear a moderator remind the participants that there are external parties present and that the interaction should be conducted in cognisance of this. The interactions must be conducted in such a way to enable information privacy that is required.

A need therefore exists for collaboration privacy. Privacy considerations arise for all types of collaborations and not just those collaborations discussed in the '519 Application. While elements of the '519 Application are used as an example, this disclosure applies to a broad range of forms of collaboration. For example, the issue can arise in an ordinary conference call in which parties external and internal to a company are present. These, as well as other related advantages, will be described in the present disclosure.

### Brief Description Of Drawings

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
Figure 1 is a schematic diagram depicting illustrative interactions of users within and outside an organization in accordance with one or more aspects of the present disclosure;
Figure 2 is an organizational diagram depicting illustrative functions of a context manager in accordance with one or more aspects of the present disclosure;
Figure 3 is a block diagram representing an exemplary system for managing privacy collaborations in accordance with one or more aspects of the present disclosure;
Figure 4 is an exemplary user interface showing enhanced features for collaboration privacy in accordance with one or more aspects of the present disclosure; and
Figure 5 is a flow chart depicting illustrative processes for establishing information privacy within the system in accordance with one or more aspects of the present disclosure.

### Description Of The Disclosure

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the scope of this disclosure.

US Patent Publication US 2009/248464 A1 titled "Method, System and Apparatus for Managing Context" by Tim Trinh and Tom Gray (hereinafter the '519 Application), discloses collaborations between a number of groups to achieve a common goal. As disclosed in the '519 Application, the term context can refer to where the user is, and/or what the user is doing, whom the user is with and what can be deduced from this data. The "what" and the "who" of a context can go beyond raw data however. A context agent for a context can contain If-Then rules or policies that relate to more concrete facts to more abstract concepts. For example, if a location aware context agent determines that the user is in a specific room, say 603-1, a context agent rule can identify room 603-1 as a meeting room and make an assertion about the user being within a meeting room, and further that the user is in a meeting. This data can then be saved in a context object associated with a current context, while the current context is active.

While elements of the '519 Application are used as an example, this disclosure applies to a broad range of forms of collaboration and is not limited to those concepts provided therein. Rather, the present disclosure can be thought of as an extension of the '519 Application or an entirely separate system having components which can be similar. Generally described, the present disclosure relates to conferences. More specifically, this disclosure relates to collaboration privacy. In one illustrative embodiment, a system is described for a conference and other collaborations in which trusted and untrusted parties are present. To retain information privacy within the collaboration, the system determines a context for the conference. From the context, information privacy related groupings can be identified. The system can then determine information privacy measures for those privacy related groupings. The information privacy measures for the groupings can be actuated for the parties within the conference. These measures can include, but are not limited to, visual or audio announcements to trusted parties within the conference. Other information privacy measures can include privacy enabled features such as sidebar conferences between the trusted parties.

US patent specification US 2013/318571 A1 discloses a collaboration in a communication system where groups requiring various levels of privacy are communicating.

A number of advantages can be offered by the illustrative embodiment described above. Information privacy measures can be determined and implemented by the system. The system can facilitate the provision of information privacy announcements as well as offering proactive features suited to maintenance of information privacy. Single or multiple information privacy groups can be setup for many applications within the conference. The system can also support determinations of time when privacy measures should be taken. Many additional advantages of the present disclosure will become apparent to those skilled in the relevant art as provided for in the following description.

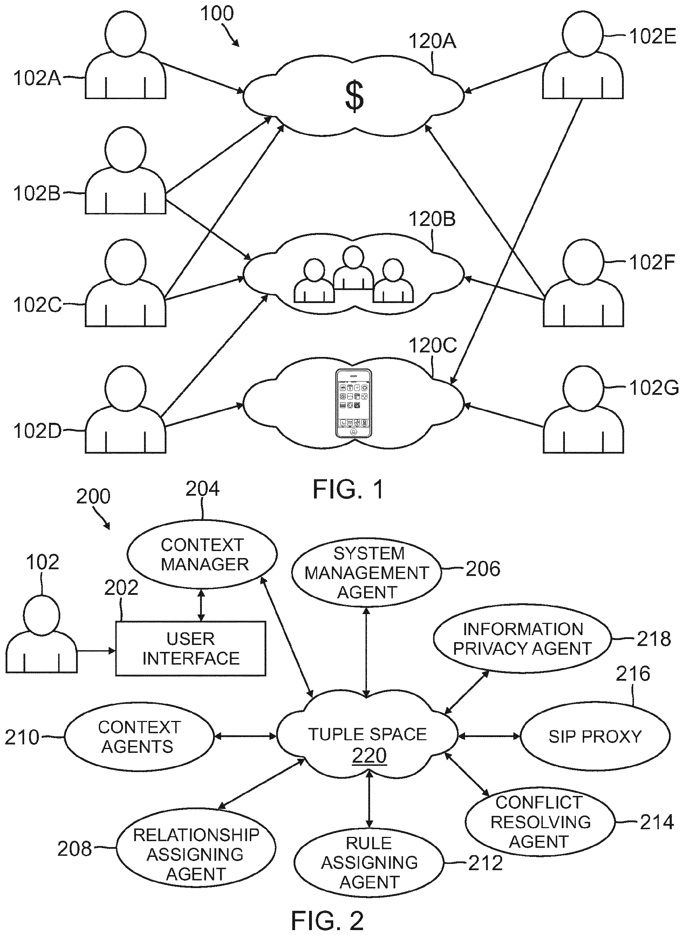

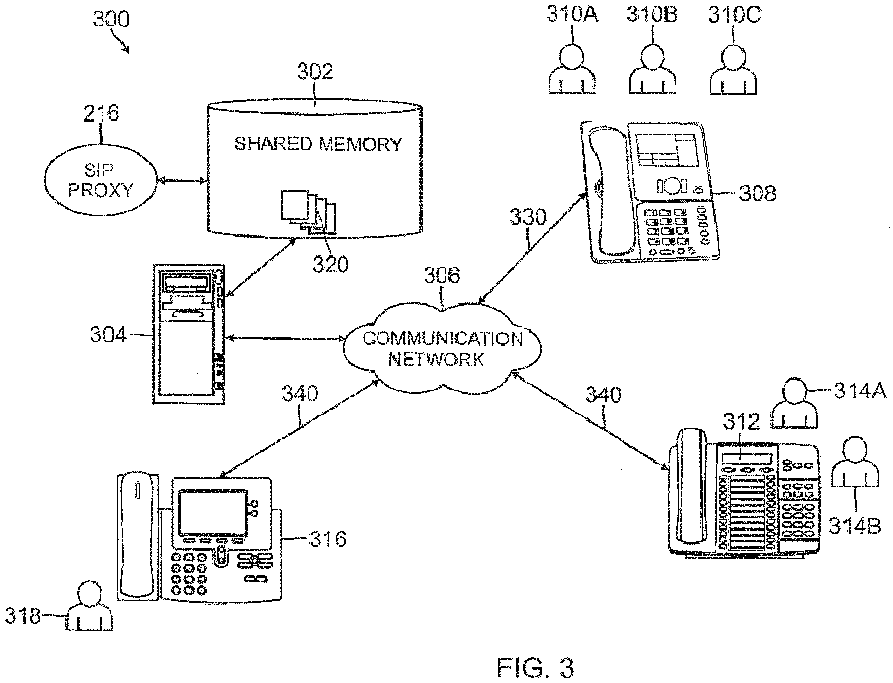

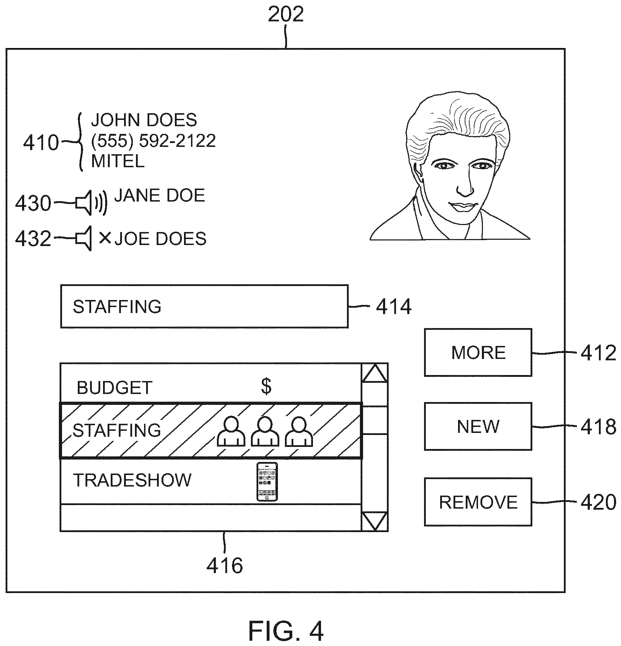

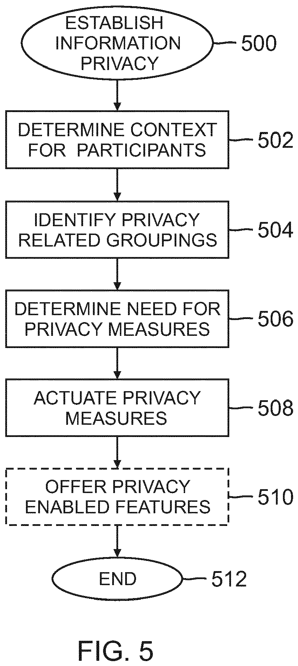

Before describing embodiments of the present disclosure, the term context will be more clearly defined in Figures 1 and 2 and the related discussion therein. Thereafter, Figures 3 and 4 will provide exemplary aspects of the collaboration privacy conference system. Figure 5 will then depict a flow chart for establishing information privacy in a conference.

Turning now to Figure 1, a schematic diagram 100 of interactions of users 102A through 102G (collectively users 102) within a business or organization is provided. The organization represented in the diagram shows that the users 102 generally do not work in isolation on individual topics or contexts 120A through 120C (collectively context 120). Rather, they can work in informal groups that address separate contexts 120. Each user 102 can spend their day working within different contexts 120 within the organization. A context 120, as previously described, can include data associated with the purpose, behavior, capability and history of such groups.

Users 102 can work within several contexts 120 simultaneously and/or consecutively. For example, the user 104 can work within the contexts of both Topic 1 120A, which can represent the budget, and Topic 2 120B, which can represent staffing. Alternatively, the user 104 can work with Topic 3 120C, not shown, which can represent a trade show. As shown in Figure 1, user 102B collaborates with users 102A, 102C, 102E and 102F on the budget 120A, and collaborates with users 102C, 102D and 102F on staffing 120B. During a communication with the user 102C, such as a telephone call or a chat session, the context can start with budget 120A, shift to staffing 120B and back to budget 120A. During such a communication, various documents can be produced, e-mails generated and sent, each associated with a different, or sometimes overlapping context 120. Furthermore, during a given workday, some of these contexts 120 can be at the back of a mind of a user and not be given any degree of attention. Other contexts 120 can be given more attention and one or more contexts 120 will generally be a current context 120 that will have the full attention of the users 102.

To manage contexts 120 and those users associated therewith, a context manager can be used. Figure 2 is an organizational diagram 200 depicting illustrative functions of a context manager 204 in accordance with one or more aspects of the present disclosure. At the center is a tuple space 220 that can be provided in shared memory. The tuple space 220 can be a type of database in which various assertions (known as tuples) about a state of the user 102 and/or a state of apparatus and systems associated with the user 102 can be posted, including current and previous contexts 120 in the form of context objects.

The diagram 200 provided in Figure 2, is generally adapted from U.S. Patent No. 7,415,104 titled "Context Aware Call Handling System" by Thomas A. Gray, Ramiro Liscano, Yongseok Choi and Thiruvengadam Radhakrishnan (hereinafter the '104 Patent), which is hereby incorporated by reference. The basic structure disclosed therein is a blackboard system surrounded by knowledge sources that collect and process contextual information associated with the user 102 such that a general user context 120 can be identified and within which incoming call attempts can be situated. The system disclosed in the '519 Application as well as the one disclosed herein extends the concepts provided in the '104 Patent by providing for the possibility of one or more specific contexts 120 within each of which specific objectives can be supported and privacy maintained.

Portions of the '104 Patent, as illustrated within diagram 200, can include a tuple space 220 to maintain a general context 120 and a plurality of knowledge source agents 206 through 218, described below, which are in communication with the tuple space 220. The context 120 is specified by one or more assertions made by one or more of the knowledge source agents 206 through 218, that are stored in the tuple space 220, for example as tuples, as known to a person of skill in the relevant art. Some of these tuples are long lived. An example of this would be user role relationships between users 102, for example, a boss-salesman relationship. Some assertions can be short-lived. Examples of this would be a location of a user 102, which could change on a minute by minute basis. The different contexts 120 can be stored in the tuple space 220 as a context object. While context objects are not depicted in Figure 2, it is understood that the context objects are stored in the tuple space 220, as in shared memory.

These assertions can be placed in the tuple space 220 by one of the knowledge source agents 206 through 218 that surround it, or another knowledge source agent. Not all knowledge source agents 206 through 218 will be able to interpret all contextual assertions. Rather the knowledge source agents 206 through 218, which need to understand and determine an assertion, can be provisioned with the syntax of the proper assertions. The semantics of an individual assertion can, and likely will, be different for each knowledge source 206 through 218. Each knowledge source agent 206 through 218 can use its own semantics to interpret assertions to its own purpose. Hence, a context object need not be strongly structured. Rather, a context object may be semi-structured such that items of data stored in the context object can be identified so that applications which need the data can find it. Furthermore, not all applications using the context object need understand all of the data contained within the context object. This aids interoperability and evolvability.

In a specific non-limiting example, data associated with a specific context 120 can be stored in a context object as assertions associated with the specific context 120. For example, an identifier for a context 120 can be stored in the context object as a key value pair that identifies the context 120. This can be of the form <Context><123456> which identifies the specific context 123456. Representing a context 120 within a context object can be tree-based, with specific areas of the context object reserved for specific types of data. Among the data that can be stored within a context object are a name of a context 120, purpose of a context 120, participants in a context 120 and communication attempts in a context 120.

Communication attempts can also be stored within a context object. For example, the assertion for this would be <Context><123456>,
<Communication_Attempt> <314159> and <Annotation><Discussing UK product launch>. An identifier for a communication attempt (i.e. "314159" in the above example) may be assigned by a call-processing agent. The identifier for the communication attempt identifies a specific call attempt. There may be many such identifiers within a context 120. The caller in this communication attempt can also be identified with the assertion <Context><123456>, <Call_Attempt><314159> and Participant><John_Does@mitel.com>.

Users 102 can interact with the context manager 204 which assists the user 102 in shifting between multiple contexts 120 through the user interface 202. A Session Initiation Protocol (SIP) proxy 216 (or alternatively a Private Branch Exchange (PBX)) can receive an incoming call. Using a Common Gateway Interface (CGI), or some other service, the SIP proxy 216 can place assertions about the call within the tuple space 220. In case of a traditional PBX, this can be limited to a Calling Line Identification (CLID) and dialed number (from Dialed Number Identification Service (DNIS)). However, using SIP or a similar protocol can result in more specific data being supplied, such as call subject, urgency, etc. The result is that the tuple space 220 can now contain a number of assertions that describe the call.

In general, the knowledge source agents 206 through 218 do not have to be installed on a particular computing device, but can be distributed over a network of computing devices, which have access to a server processing the tuple space 220. The knowledge source agents 206 through 218 can have access to various evidentiary sources that can be used to make surmises about user context. A system management agent 206 can synchronize the behavior of the other agents 208 through 218 surrounding the tuple space 220 in regard to the handling of communications (e.g. telephone calls, SIP requests, etc.) and determining contextual data. The system management agent 206 can trigger the agents 208 and 218 at the appropriate time to evaluate the information currently in the tuple space 220 and to make further assertions that collectively describe a communication.

The relationship assigning agent 208 and one or more context agents 210 can be triggered to evaluate the current assertions and relate an incoming communication to the current context 120 of the user 102. Each client (e.g. such as a computing device) may be associated with a system management agent 206. The relationship assigning agent 208 is generally enabled to respond to a relationship-assigning request from a system management agent 206. The request from the system management agent 206 generally contains caller and receiver information. The relationship assigning agent 208 assigns the relationship between the user 102 and the caller, for example according to a buddy-list of the user 102 or according to another list of relationship data, for example a company organizational chart.

One or more context agents 210 are enabled to monitor the activity of the users 102. For example, the context agents 210 can determine where the users 102 are, who they are with etc., and make assertions about context 120 to the tuple space 220. Hence the context agents 210 can have access to a schedule of the user 102, a location determining device associated with the user 102 (e.g. a GPS device enabled for wireless communication), webcams, keyboard activity detection agents etc. This data can be stored at a context object associated with the current context 120, while the current context 120 is active.

The rule assigning agent 212 can be enabled to extract matching user rules according to the conditions of each rule and the current context 120, and assign them to a relevant data field for call processing and determination of context 120. A conflict resolving agent 214 can be enabled to resolve conflicts that might be present in the assigned rules. Again, by context 120, it is meant where the user 102 is, and/or what the user 102 is doing, whom the user 102 is with and what can be deduced from this data. The "what" and the "who" of context can go beyond raw data, however. The context agent 210 can contain IF-Then rules or policies that relate more concrete facts to more abstract concepts. For example, if a location aware context agent 210 determines that the user 102 is in a specific room (say 603-1), a context agent rule can identify room 603-1 as a meeting room and make an assertion about the user 102 being within a meeting room, and further that the user 102 is in a meeting. This data can then be saved in the context object associated with current context 120, while the current context 120 is active.

Similarly the rule assigning agent 212 has a plurality of rules that can take evidence about a call and relate the caller with the user 102. For example, rules can relate the calling number (e.g. 555-592-2122) to being the telephone number of a specific person (e.g. John Does). In turn, other rules can relate the caller to being the supervisor of the user 102. This data can then be saved in the context object associated with current context 120, while the current context 120 is active.

An information privacy agent 218, which can be an addition to the '104 Patent, can be connected to the tuple space 220 or be entirely independent. The information privacy agent 218 can maintain information privacy related groupings for a particular context 120 where needed. These groupings can be dynamically established through techniques known in the relevant art. Each context 120 can have its own unique groupings based on the participants of a conference or collaboration. Within the information privacy agent 218, information privacy measures can be established for each of these groupings. Through the agent 218, groupings and measures can be established for a collaboration.

The operation of the context agent 210 and the relationship assigning agent 208 can take some of the cursory information available with an incoming call (e.g. the CLID) and fit the call into the current context 120 of the user 102. Furthermore, the data associated with the call can be saved to the context object associated with the current context 120. So a call from (555) 592-2122, which intrinsically provides only limited guidance, is transformed into a call from the supervisor of the user, while the user 102 is in a meeting room. Such data stored in the context object can be later retrieved by the user 102 and to assist the user 102 in remembering events and other data associated with a specific context 120. Other information can also be supplied and manipulated by rules, for example, who the user 102 is with while a current context 120 is active, the subject of a call or communication that occurs while a current context 120 is active or the documents that the user 102 is working on while a current context 120 is active. Together the data, and derived assertions, fit the call into the user's current working and social context 120.

Using these assertions, the rule assigning agent 212 can determine which of the policies that are supplied to the system 200 are appropriate to the current communication. Typically, multiple rules will apply to a call. The conflict resolving agent 214 can then determine which rule should have priority. It can then supply this to the SIP proxy 216 (or PBX) for action. As depicted, the context manager 204 can also be in communication with the tuple space 220, and further, here, the context objects associated with a user 102 are stored as sets of assertions within the tuple space 220. The context manager 204 can have access to and be able to interpret the assertions in the context objects, as well as assertions that the conflict resolving agent 214 is providing.

The '519 Application describes various methods by which the current context 120 of a user can be determined. The '519 Application describes a user interface which can display a list of all of the contexts 120 of which the user 102 is a participant. It describes methods by which the user 102 can select a current context 120 from this list and, as well, describes how the user can do this as the focus shifts during a meeting or other conference and other contexts 120 become the center of focus. The '519 Application also describes methods whereby a user (or a robot such as a computer program) of a context 120 can invite others (human and robot) to interact within the context 120. It describes methods by which the invitation to participate in a context can be transmitted in a set up message such as a SIP proxy 216. Nevertheless, the '519 Application does not disclose privacy measures taken in such collaborations and more specifically, those functions provided by the information privacy agent 218 depicted above. In part, these collaborations can be implemented through the information privacy agent 218 described above.

Referring now to Figure 3, a block diagram representing an exemplary system 300 for managing privacy collaborations in accordance with one or more aspects of the present disclosure is provided. The system 300 can include, but is not limited, to external users 310A through 310C (collectively external users 310) using device 308 in communication with internal users 314A and 314B (collectively internal users 314) using device 312. For purposes of illustration, device 312 can be a conference device known to those skilled in the relevant art. Another user 318 or further users can be in communication with the external users 310 and/or the internal users 314 through other devices such as device 316. Fewer or more users 102 can exist and those presented are for illustrative purposes only. These users 102 can be internal, external or both to the organization or business.

As provided in the '519 Application, conferences can be established using SIP proxies 216. These proxies 216 can be provided to shared memory 302 where context objects 320 can be retrieved. These context objects 320, as described above, can store particulars of any specific collaboration for enhancing interactions within a conference. The context objects 320 are stored in the tuple space 220, which can be in the shared memory 302. The context server 304 can share the context objects 320 associated with the current context 120, which can be plugged into the communication network 306. Numerous configuration taught both in the '519 Application and the '104 Patent disclose how these context objects 320 are shared among numerous users for enhancing collaborations.

Through the context object 320, several forms of collaborations can be setup between the external users 310, internal users 314 or other users 318 for establishing private collaborations. For example, a conference can be established through the communication network 306 between the external users 310 and internal users 314 and 318. In this illustration, the internal users 314 have established communications with the external parties 310 through an internal trunk 340 and an external trunk 330 of the communication network 306. Because of the external trunk 330, the internal users 314 and 318 should be kept aware of the fact that they are speaking to external users 310 to maintain privacy. In a second example, communications between the external users 310 and internal users 314 are monitored or overheard by another internal user 318. Through the context object 320, private collaborations between the internal user 314 and 318 can be established without the knowledge of the external users 310. Through the establishment of such a conference, a supervisor or the like can monitor the call, but not participate in the call. While several examples were depicted, those skilled in the relevant art will appreciate that other configurations for maintaining privacy in a conference can be further enhanced by the system 300 using the context objects 320 described above.

As will become apparent from the discussion provided below, privacy settings can be determined through location or through some other method. Generally when making a conference call, communications within the same organization or building are privileged. However, if they are calling through an external trunk 330, internal users 314 and 318 should at least consider privacy issues related to any communications provided to those users 310 on the external trunk 330. When an external trunk 330 is established, the context 120 may be automatically set such that the internal users 314 are aware that privacy is to be maintained. The context 120 can be leveraged whereby internal users 314 within the same conference room or business can be grouped while those that are outside are placed into another grouping, such as those users 310 connected through an external trunk 330. Privacy settings can also be changed based on context. For example, some internal users 314 and 318 should not be privy to the budget 120A regardless of whether communicating over an internal trunk 340 or external trunk 330. Other configurations for determining trusted and untrusted parties will become apparent from the discussion provided below.

Figure 4 is an illustrative user interface 202 showing enhanced features for collaboration privacy in accordance with one or more aspects of the present disclosure. In particular, it portrays the display for which the internal parties 314 having device 312 can use. The interface 202 can include tombstone information 410 about the internal users 314. Tombstone information 410 can include, but is not limited to the name, affiliation and contact address of the users 314. The tombstone information 410 for the users 314 can be grouped together under a pseudonym as shown on the user interface 202. A MORE button 412 may be provided that allows the users 314 to adjust data within the tombstone information 410.

The user interface 202 can also include a current context box 414 for displaying the current context 120 of the communication between the users. An all context box 416 can be provided, which displays a list of identifiers of potential contexts 120 of the collaborative session, which the internal users 314 can choose from. The user interface 202 can also include a new context button 418. Upon activating the new context button 418, the users 314 can be prompted to enter an identifier (e.g. a name) for the new context 120, for example via a pop-up screen. The new context 120 can then be displayed in the all context box 416. The user interface 202 can also include a remove context button 420. Upon activating the remove context button 420, a highlighted context can be removed from the list and/or the context box 414.

The user interface 202 can provide enhance privacy between users 102 in the conference. The interface 202 shows a typical view from the perspective of the internal users 314 using device 312. The conference device can handle multiple party calling known to those skilled in the relevant art. Through the interface 202, multiple users 102 can be setup for the conference, including those that are external and internal. For example, the internal users 314 can connect with external users 310 and at the same time be connected with internal user 318. As shown in the user interface 202 provided in Figure 4, a graphical representation of a speaker 430 can be provided for an internal user 318. Other symbols can be used. A similar speaker 432 can also be provided representing external users 310. Through these representations, the users 314 can place other participants on hold, muting them or dropping them altogether. The volume can also be adjusted for the participants through those representations. A speaker representation may be provided for the conference device 400 itself to adjust its own volume or be muted.

Generally, a speaker representation can be provided for each device connected into the conference. For example, speakers can be provided for the device 316 operated by Jane Doe 318 and the device 308 used by Joe Does 310. As will be described below, participants in a conference will be classified as trusted or untrusted. Based on these classifications, identifiers can also be placed by the speaker representations along with audio or visual announcements pertaining to their privacy measures.

The '519 Application discloses a system in which the context 120 of a conference is explicit. However, there are other systems in which information privacy aspects are implicit and important. For example, plain old telephone service (POTS) systems commonly provide conference call services. These conferences in which external and internal users are present should apply constraints on the participants on the extent of candor and openness of the discussion. Figure 5 is a flow chart depicting illustrative processes for establishing information privacy within the system 300 in accordance with one or more aspects of the present disclosure. While primarily being described as used in the system 300 depicted above, those skilled in the relevant art will appreciate that these processes can be applied to most communication environments that use privacy collaborations. These processes can begin at block 500.

Previously described, a context 120 can store the particulars of a specific collaboration. The privacy information agent 218 can be directly tied to the context 120 of a particular conference. At block 502, the context 120 for which users 102 are participating in a conference can be determined. These participants can include both internal users 314 and 318 and external users 310. The context 120 can be determined either through the context manager 204 on a conference device or through the context server 304 associated with the context objects 320. The context 120 for the participants may be determined by whether the collaborations are taking place over internal trunks 340 or external trunks 330 of the communication network 306. The network identities of these participants on external trunks 330 can be assessed on whether they are internal or external to the organization. When participants are on external trunks 330, the context 120 for those users 102 can be classified as untrusted. Alternatively, a list of caller identifications can be used for external users 310 who are calling from their home office via external trunks 330 to determine whether those external users 310 are trusted or not. In this way, a more accurate determination can be defined. The same functionality can be used to determine that the participants are calling in from other offices of the local company.

To determine the context 120 of a participant, the dialing numbers that are used to seize and route a conference connection over an external trunk 330 may be analyzed to determine if they are being routed to a local party or office. Based on this determination, the users can be identified as untrusted or trusted. In standard or conventional Voice over Internet Protocol (VoIP) systems, SIP proxies 210 can provide a system event whereby the agent of a user in the conference can be queried as to which other parties that it is connecting to in the conference. This can be used in a manner similar to that described above to determine if both the internal and external users are connected to a call. These techniques can be extended to determine that the list of participants of a conference contains users who are both members and non-members of an internal project. Determining the context 120 of participants in a conference can be performed locally by participating users or a conference server such as a PBX. The context 120 can be determined by an agent local to an individual user 102 or it can be determined centrally by a conference server that serves multiple users 102.

After determining the context 120 in which participants are collaborating, at block 504, privacy related groups can be identified. These privacy groupings for the participants are associated with the context 120 determined before. It can be taken that information privacy is to be maintained within the group of participants of a context 120 against all current external participants in a conference who are not members of the context 120. Here, the processes can pass directly to block 506. Alternatively, this is not the case. For example, members of a context 120 can participate in a conference with senior managers of an organization. Such personnel are not members of the context 120, but by reason of their corporate role and/or authority, they can be privy to the private information of the context 120. Known to those skilled in the relevant art, various methods can be used to identify external personnel and identify privacy related groupings.

In the '519 Application, the identity of external personnel who can be trusted with information privacy of a context 120 could be identified either individually or by classes within the context object 320. A policy system can then be used to match the undefined external users 310 to the trust information contained within the context objects 320 to determine if members of the conference are untrusted with respect to information privacy. Similar systems can be extended to other forms of collaboration. If no specific context object 320 or similar entity is provided, the policies that apply across all contexts 120 may be supplied.

Continuing with Figure 5, information privacy measures can be determined based on the groupings or separately on the individuals within the collaboration at block 506. Beforehand, privacy groupings were identified as trusted or untrusted for the purposes of information privacy of the context 120. When no untrusted participants are present in the conference, then no action is taken for information privacy and the processes can end. When, however, untrusted participants are in the conference, privacy measures are actuated at block 508. With the determination of a context 120 and when parties from different information privacy groupings are present, appropriate measures can be taken to inform users. Users can be aware of this information to guide their behavior during the call.

Multiple privacy measures can be taken that can be used alone or in combination. The conference device or the like may provide a whisper announcement. The whisper announcement can generally be provided to trusted parties or groupings. The whisper announcement can include a one way audio announcement that can be directed to a specific party that will not be audible to other users 102 in a call or conference. The whisper announcement can inform participants in an information privacy grouping that external users 310 are present in the conference. For example, the conference device could provide the message "An external party is present. Please be aware of this in making any comment in this conference" through its speaker.

Visual announcements may be provided to signal to a trusted party or grouping the presence of untrusted parties. For example, a temporary text message on the display of the conference device can show "External parties present." A permanent text message can also be provided showing the same. Indications of privacy measures can also include change in the text or background color, reverse video, activation of an associated Light Emitting Diode (LED) and so on. A permanent light or indicator can be activated when untrusted participants are present. When these indicators are shown, the users 102 will be aware that untrusted parties are present and some collaborations should be kept private during the conference.

Optionally, at block 510, privacy enabled features can be offered. Certain features can be useful to parties in an information privacy grouping if external users 310 are present. These features may proactively be offered to users when the situation of a conference or other collaboration with untrusted users present is detected. These features can be offered by providing special controls in a user interface 202 dedicated to the conference. A sidebar conference may be established with parties in an information privacy grouping for private collaborations. For example, internal users 314 and 318 can have a sidebar conference because of their trusted status. These collaborations can include whisper voice connections, whisper voice messages, Instant Messaging (IM), electronic mail or other forms of communications only to members of an information privacy grouping.

The processes for establishing information privacy can end at block 512. Those skilled in the relevant art will appreciate that a number of variations can be used to these processes and should not be limited to those described above. Establishing information privacy can be invoked at a number of different times. The functionality of establishing collaboration privacy can be suited to the occurrence of untrusted users in a call or conference or other from of collaboration in which users 102 internal and external to an information privacy grouping are present.

The '519 Application disclosed that a context 120 can change during a collaboration. With this change in context 120, the information privacy groupings within a conference will also generally change. Additionally, the participants within a conference will change from time to time as parties join or leave a conference. Thus the processes described above can, in some implementations, be initiated at the time of conference initiation, context change and/or the joining or leaving of a party. When changed, a new context 120 for participation in the conference can be determined, new groups can be identified with the new context 120 and new privacy measures can be identified and actuated.

Collaboration privacy can be applied to conferences having multiple contexts 120. It should be noted that there can be instances in which a single physical context 120 can contain two or more contexts 120. For example, two internal project teams can interact in a conference. Each of these teams can have its own need for information privacy and with this the need to be informed of the presence of participants who are outside of their information privacy group. The processes described above, that are local to individual participants for the determination of information privacy, can function without change in this environment.

The data structures and code described in this detailed disclosure are typically stored on a non-transitory computer-readable storage medium, which can be any device or medium that can store code and/or data for use by a computer system. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the detailed disclosure section can be embodied as code and/or data, which can be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described below can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The technology described herein can be implemented as logical operations and/or modules. The logical operations can be implemented as a sequence of processor-implemented executed steps and as interconnected machine or circuit modules. Likewise, the descriptions of various component modules can be provided in terms of operations executed or effected by the modules. The resulting implementation is a matter of choice, dependent on the performance requirements of the underlying system implementing the described technology. Accordingly, the logical operations making up the technology described herein are referred to variously as operations, steps, objects, or modules. It should be understood that logical operations can be performed in any order, unless explicitly claimed otherwise or a specific order is inherently necessitated by the claim language.

Various embodiments of the present disclosure can be programmed using an object-oriented programming language, such as SmallTalk, Java, C++, Ada or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

In software implementations, computer software and/or data is stored on a machine readable medium as part of a computer program product, and is loaded into a computer system or other device or machine via a removable storage drive, hard drive, or communications interface. Computer programs, also called computer control logic or computer readable program code, are stored in a main and/or secondary memory, and executed by one or more processors, controllers, or the like to cause the one or more processors to perform the functions of the disclosure as described herein.

The figures and examples above are not meant to limit the scope of the present disclosure to a single embodiment, as other embodiments are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present disclosure, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A computer-implemented method of establishing privacy in a conference call, the method comprising:
determining a context shared between at least two parties in a conference call and determining each party as trusted or untrusted (502);
identifying privacy groupings as either trusted or untrusted for said at least two parties associated with said context (504), wherein identifying said privacy groupings is based on the context and the determination of each party as trusted or untrusted;
determining information privacy measures of said privacy groupings (506); and
actuating said information privacy measures for said privacy groupings in said conference call (508), wherein actuating said information privacy measures comprises providing an auditory or visual announcement directed towards at least one privacy grouping that is trusted.

2. The method of claim 1, comprising providing a graphical user interface listing a plurality of contexts for said conference call.

3. The method of claim 1 or claim 2, comprising receiving a generated context from at least one party of said at least two parties or through a computer program and inviting at least one other party of said at least two parties to said conference call for said context, and optionally wherein inviting said at least one other party of said at least two parties to said conference call for said context comprises providing a setup message in a session initiation protocol invite.

4. The method of claim 1, wherein determining said context comprises identifying whether said at least two parties are on external trunks or internal trunks of an organization and wherein identifying said privacy groupings comprises separating said at least two parties associated with said external trunks from said internal trunks, or identifying whether said at least two parties are members or non-members of an organization and wherein identifying said privacy groupings comprises separating said at least two parties associated with said members from said non-members.

5. The method of any preceding claim, wherein providing an auditory announcement comprises presenting a whisper announcement to said at least one privacy grouping.

6. The method of any preceding claim, wherein providing a visual announcement comprises presenting a message announcement on a display of said at least one privacy grouping or presenting a display change of said at least one privacy grouping.

7. The method of any preceding claim, wherein determining each party as trusted or untrusted in said conference call comprises determining which parties are connected over an internal or external trunk in a communication network, or examining dialing numbers.

8. The method of any preceding claim, further comprising removing information privacy measures when said parties are all trusted or untrusted.

9. The method of any preceding claim, further comprising establishing a sidebar conference for said at least one privacy grouping that is trusted.

10. A communication system (300) comprising:
means (204,304) configured to determine a context shared between at least two parties in a conference call and identify each party as trusted or untrusted;
means configured to identify privacy groupings as either trusted or untrusted for said at least two parties associated with said context, wherein identifying said privacy groupings is based on the context and the identification of each party as trusted or untrusted ;
means configured to determine information privacy measures of said privacy groupings; and
means configured to actuate said information privacy measures for said privacy groupings in said conference call, wherein actuating said information privacy measures comprises providing an auditory or visual announcement directed towards at least one privacy grouping that is trusted.

11. The communication system of claim 10 further comprising a conference device (312,316), wherein said conference device is configured to provide the auditory or visual announcement.

12. The communication system of claim 10 or claim 11, wherein identifying privacy groupings comprises matching undefined external parties of said conference call to trust information in a policy system.

13. The communication system of any of claims 10 to 12, further configured to determine a new context for participation in said conference call, identify new privacy groupings associated with said new context and determine new information privacy measures for said new privacy groupings and/or further configured to determine new information privacy measures for said privacy groupings when parties leave or join said conference call.

14. A computer program comprising instructions which, when executed by a computer, cause the computer to perform the method according to any of claims 1 to 9.

## Patentansprüche

1. Computerimplementiertes Verfahren zum Herstellen einer Privatsphäre bei einem Konferenzgespräch, wobei das Verfahren Folgendes umfasst:
Bestimmen eines gemeinsamen Kontextes von mindestens zwei Teilnehmern bei einem Konferenzgespräch und Bestimmen jedes Teilnehmers als vertrauenswürdig oder nicht vertrauenswürdig (502);
Identifizieren von Privatsphäregruppierungen als entweder vertrauenswürdig oder nicht vertrauenswürdig für die mindestens zwei mit dem Kontext assoziierten Teilnehmer (504), wobei das Identifizieren der Privatsphäregruppierungen auf dem Kontext und der Bestimmung jedes Teilnehmers als vertrauenswürdig oder nicht vertrauenswürdig basiert;
Bestimmen von Datenschutzmaßnahmen der Privatsphäregruppierungen (506); und
Auslösen der Datenschutzmaßnahmen für die Privatsphäregruppierungen bei dem Konferenzgespräch (508), wobei das Auslösen der Datenschutzmaßnahmen das Bereitstellen eines akustischen oder visuellen Hinweises, der an mindestens eine Privatsphäregruppierung, die vertrauenswürdig ist, gerichtet ist, umfasst.

2. Verfahren nach Anspruch 1, das das Bereitstellen einer grafischen Benutzeroberfläche, die eine Vielzahl von Kontexten für das Konferenzgespräch auflistet, umfasst.

3. Verfahren nach Anspruch 1 oder Anspruch 2, das das Empfangen eines erzeugten Kontextes von mindestens einem Teilnehmer der mindestens zwei Teilnehmer oder über ein Computerprogramm und das Einladen mindestens eines weiteren Teilnehmers der mindestens zwei Teilnehmer zu dem Konferenzgespräch für den Kontext umfasst, und optional wobei das Einladen des mindestens einen weiteren Teilnehmers der mindestens zwei Teilnehmer zu dem Konferenzgespräch für den Kontext das Bereitstellen einer Einrichtungsnachricht in einer Session-Initiation-Protocol-Invite-Anforderung umfasst.

4. Verfahren nach Anspruch 1, wobei das Bestimmen des Kontextes das Identifizieren, ob die mindestens zwei Teilnehmer in externen oder internen Leitungen einer Organisation sind, wobei das Identifizieren der Privatsphäregruppierungen das Trennen der mindestens zwei Teilnehmer, die mit den externen Leitungen assoziiert sind, von den internen Leitungen umfasst, oder das Identifizieren, ob die mindestens zwei Teilnehmer Mitglieder oder Nichtmitglieder einer Organisation sind, wobei das Identifizieren der Privatsphäregruppierungen das Trennen der mindestens zwei Teilnehmer, die mit den Mitgliedern assoziiert sind, von den Nichtmitgliedern umfasst, umfasst.

5. Verfahren nach einem vorhergehenden Anspruch, wobei das Bereitstellen eines akustischen Hinweises das Präsentieren eines geflüsterten Hinweises für die mindestens eine Privatsphäregruppierung umfasst.

6. Verfahren nach einem vorhergehenden Anspruch, wobei das Bereitstellen eines visuellen Hinweises das Präsentieren eines Nachrichtenhinweises auf einem Display der mindestens einen Privatsphäregruppierung oder das Präsentieren einer Display-Änderung der mindestens einen Privatsphäregruppierung umfasst.

7. Verfahren nach einem vorhergehenden Anspruch, wobei das Bestimmen jedes Teilnehmers als vertrauenswürdig oder nicht vertrauenswürdig bei dem Konferenzgespräch das Bestimmen, ob Teilnehmer über eine interne oder externe Leitung in einem Kommunikationsnetz verbunden sind, oder das Prüfen von Rufnummern umfasst.

8. Verfahren nach einem vorhergehenden Anspruch, das ferner das Entfernen von Datenschutzmaßnahmen, wenn die Teilnehmer alle vertrauenswürdig oder nicht vertrauenswürdig sind, umfasst.

9. Verfahren nach einem vorhergehenden Anspruch, das ferner das Herstellen einer Nebenkonferenz für die mindestens eine Privatsphäregruppierung, die vertrauenswürdig ist, umfasst.

10. Kommunikationssystem (300), das Folgendes umfasst:
Mittel (204, 304), das konfiguriert ist, um einen gemeinsamen Kontext von mindestens zwei Teilnehmern bei einem Konferenzgespräch zu bestimmen und jeden Teilnehmer als vertrauenswürdig oder nicht vertrauenswürdig zu identifizieren;
Mittel, das konfiguriert ist, um Privatsphäregruppierungen als entweder vertrauenswürdig oder nicht vertrauenswürdig für die mindestens zwei mit dem Kontext assoziierten Teilnehmer zu identifizieren, wobei das Identifizieren der Privatsphäregruppierungen auf dem Kontext und der Identifizierung jedes Teilnehmers als vertrauenswürdig oder nicht vertrauenswürdig basiert;
Mittel, das konfiguriert ist, um Datenschutzmaßnahmen der Privatsphäregruppierungen zu bestimmen; und
Mittel, das konfiguriert ist, um die Datenschutzmaßnahmen für die Privatsphäregruppierungen bei dem Konferenzgespräch auszulösen, wobei das Auslösen der Datenschutzmaßnahmen das Bereitstellen eines akustischen oder visuellen Hinweises, der an mindestens eine Privatsphäregruppierung, die vertrauenswürdig ist, gerichtet ist, umfasst.

11. Kommunikationssystem nach Anspruch 10, das ferner ein Konferenzgerät (312, 316) umfasst, wobei das Konferenzgerät konfiguriert ist, um den akustischen oder visuellen Hinweis bereitzustellen.

12. Kommunikationssystem nach Anspruch 10 oder Anspruch 11, wobei das Identifizieren von Privatsphäregruppierungen das Abgleichen undefinierter externer Teilnehmer des Konferenzgesprächs mit Vertrauenswürdigkeitsinformationen in einem Richtliniensystem umfasst.

13. Kommunikationssystem nach einem der Ansprüche 10 bis 12, das ferner konfiguriert ist, um einen neuen Kontext zur Beteiligung an dem Konferenzgespräch zu bestimmen, neue Privatsphäregruppierungen, die mit dem neuen Kontext assoziiert sind, zu identifizieren und neue Datenschutzmaßnahmen für die neuen Privatsphäregruppierungen zu bestimmen, und/oder das ferner konfiguriert ist, um neue Datenschutzmaßnahmen für die Privatsphäregruppierungen zu bestimmen, wenn Teilnehmer das Konferenzgespräch verlassen oder ihm beitreten.

14. Computerprogramm, das Befehle, die bei der Ausführung durch einen Computer bewirken, dass der Computer das Verfahren nach einem der Ansprüche 1 bis 9 durchführt, umfasst.

## Revendications

1. Procédé mis en oeuvre par ordinateur pour établir la confidentialité lors d'une conférence téléphonique, le procédé comprenant les étapes suivantes :
déterminer un contexte partagé entre au moins deux parties d'une conférence téléphonique et déterminer chaque partie comme étant digne de confiance ou non digne de confiance (502) ;
identifier des groupes de confidentialité comme étant soit dignes de confiance, soit non dignes de confiance, pour lesdites au moins deux parties associées audit contexte (504), où l'identification desdits groupes de confidentialité est basée sur le contexte et la détermination de chaque partie comme étant digne de confiance ou non digne de confiance (506) ; et
actionner lesdites mesures de confidentialité des informations desdits groupes de confidentialité dans ladite conférence téléphonique (508), où actionner lesdites mesures de confidentialité des informations comprend de délivrer une annonce auditive ou visuelle destinée à au moins un groupe de confidentialité qui est digne de confiance.

2. Procédé selon la revendication 1, comprenant de fournir une interface utilisateur graphique listant une pluralité de contextes pour ladite conférence téléphonique.

3. Procédé selon la revendication 1 ou la revendication 2, comprenant de recevoir un contexte généré à partir d'au moins une partie desdites au moins deux parties ou par l'intermédiaire d'un programme informatique et d'inviter au moins une autre partie desdites au moins deux parties à ladite conférence téléphonique pour ledit contexte et, optionnellement, où inviter ladite au moins une autre partie desdites au moins deux parties à ladite conférence téléphonique pour ledit contexte comprend de fournir un message de configuration dans une invite de protocole d'initiation de session.

4. Procédé selon la revendication 1, dans lequel la détermination dudit contexte comprend d'identifier si lesdites au moins deux parties sont sur des lignes de jonction externes ou des lignes de jonction internes d'une organisation, et où l'identification desdits groupes de confidentialité comprend de séparer lesdites au moins deux parties associées auxdites lignes de jonction troncs externes desdites lignes de jonction internes, ou d'identifier si lesdites au moins deux parties sont membres ou non membres d'une organisation, et où l'identification desdits groupes de confidentialité comprend de séparer lesdites au moins deux parties associées auxdits membres desdits non membres.

5. Procédé selon l'une quelconque des revendications précédentes, dans lequel délivrer une annonce auditive comprend de présenter une annonce murmurée audit au moins un groupe de confidentialité.

6. Procédé selon l'une quelconque des revendications précédentes, dans lequel délivrer une annonce visuelle comprend de présenter une annonce de type message sur un affichage dudit au moins un groupe de confidentialité ou de présenter un changement d'affichage dudit au moins un groupe de confidentialité.

7. Procédé selon l'une quelconque des revendications précédentes, dans lequel la détermination de chaque partie comme étant digne de confiance ou non digne de confiance dans ladite conférence téléphonique comprend de déterminer quelles parties sont connectées sur une ligne de jonction interne ou externe dans un réseau de communication ou d'examiner des numéros d'appel.

8. Procédé selon l'une quelconque des revendications précédentes, comprenant en outre de supprimer des mesures de confidentialité des informations lorsque lesdites parties sont toutes dignes de confiance ou toutes non dignes de confiance.

9. Procédé selon l'une quelconque des revendications précédentes, comprenant en outre d'établir une conférence dans un encadré latéral pour ledit au moins un groupe de confidentialité qui est digne de confiance.

10. Système de communication (300) comprenant :
des moyens (204, 304) configurés pour déterminer un contexte partagé entre au moins deux parties d'une conférence téléphonique et identifier chaque partie comme étant digne de confiance ou non digne de confiance ;
des moyens configurés pour identifier des groupes de confidentialité comme étant soit dignes de confiance, soit non dignes de confiance, pour lesdites au moins deux parties associées audit contexte, où l'identification desdits groupes de confidentialité est basée sur le contexte et l'identification de chaque partie comme étant digne de confiance ou non digne de confiance ;
des moyens configurés pour déterminer des mesures de confidentialité des informations desdits groupes de confidentialité ; et
des moyens pour actionner lesdites mesures de confidentialité des informations pour lesdits groupes de confidentialité dans ladite conférence téléphonique, où actionner lesdites mesures de confidentialité des informations comprend de délivrer une annonce auditive ou visuelle destinée à au moins un groupe de confidentialité qui est digne de confiance.

11. Système de communication selon la revendication 10 comprenant en outre un dispositif de conférence (312, 316), où ledit dispositif de conférence est configuré pour délivrer l'annonce auditive ou visuelle.

12. Système de communication selon la revendication 10 ou la revendication 11, dans lequel l'identification des groupes de confidentialité comprend de faire correspondre des parties externes non définies de ladite conférence téléphonique à des informations de confiance dans un système politique.

13. Système de communication selon l'une quelconque des revendications 10 à 12, configuré en outre pour déterminer un nouveau contexte de participation à ladite conférence téléphonique, identifier de nouveaux groupes de confidentialité associés audit nouveau contexte et déterminer de nouvelles mesures de confidentialité des informations pour lesdits nouveaux groupes de confidentialité et/ou configuré en outre pour déterminer de nouvelles mesures de confidentialité des informations pour lesdits groupes de confidentialité lorsque des parties quittent ou rejoignent ladite conférence téléphonique.

14. Programme d'ordinateur comprenant des instructions qui, lorsqu'elles sont exécutées par un ordinateur, amènent l'ordinateur à exécuter le procédé selon l'une quelconque des revendications 1 à 9.
